(19) Europäisches Patentamt / European Patent Office / Office européen des brevets

(11) **EP 4 160 717 A1**

(12) **EUROPEAN PATENT APPLICATION**
published in accordance with Art. 153(4) EPC

(43) Date of publication:
**05.04.2023 Bulletin 2023/14**

(21) Application number: **21812224.0**

(22) Date of filing: **12.05.2021**

(51) International Patent Classification (IPC):
**H01M 4/13** (2010.01) **H01M 4/62** (2006.01)

(52) Cooperative Patent Classification (CPC):
**H01M 4/13; H01M 4/62;** Y02E 60/10; Y02P 70/50

(86) International application number:
**PCT/JP2021/017974**

(87) International publication number:
**WO 2021/241217 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.05.2020 JP 2020094080**

(71) Applicant: SANYO Electric Co., Ltd.
**Daito-shi**
**Osaka 574-8534 (JP)**

(72) Inventor: **SAKITANI, Nobuhiro**
**Chuo-ku, Osaka-shi, Osaka 540-6207 (JP)**

(74) Representative: **Novagraaf International SA**
**Chemin de l'Echo 3**
**1213 Onex, Geneva (CH)**

(54) **NONAQUEOUS ELECTROLYTE SECONDARY BATTERY POSITIVE ELECTRODE AND NONAQUEOUS ELECTROLYTE SECONDARY BATTERY**

(57) The purpose of the present disclosure is to provide a nonaqueous electrolyte secondary battery positive electrode in which separation of a positive electrode mixture layer is lessened, and which has improved charge/discharge cycle characteristics. A nonaqueous electrolyte secondary battery positive electrode according to an aspect of the present disclosure is provided with a positive electrode collector and a positive electrode mixture layer that is formed on the surface of the positive electrode collector. The positive electrode mixture layer contains a positive electrode active material, fibrous carbon, and nonfibrous carbon. When the positive electrode mixture layer is divided into two equal regions in the thickness direction, and the half of the regions that is on the positive electrode collector side is defined as a first region and the half of the regions that is on the outer surface side is defined as a second region, the mass proportion of the fibrous carbon with respect to the total mass of the fibrous carbon and the nonfibrous carbon in the first region is set to be less than the mass proportion of the fibrous carbon with respect to the total mass of the fibrous carbon and the nonfibrous carbon in the second region.

Figure 2

**Description**

TECHNICAL FIELD

The present disclosure relates to a positive electrode for a non-aqueous electrolyte secondary battery and a non-aqueous electrolyte secondary battery, and particularly relates to a positive electrode for a non-aqueous electrolyte secondary battery having excellent adhesiveness and charge-discharge cycle characteristics, and a non-aqueous electrolyte secondary battery comprising the positive electrode.

BACKGROUND ART

In recent years, in order to improve output characteristics of secondary batteries, incorporation of carbon nanotube as a conductive agent into a positive electrode to reduce resistance of the positive electrode has been investigated. Patent Literature 1 discloses a positive electrode having a changed mixing ratio between carbon nanotube and acetylene black included in a positive electrode mixture layer.

CITATION LIST

PATENT LITERATURE

PATENT LITERATURE 1: Japanese Unexamined Patent Application Publication No. 2019-61734

SUMMARY

TECHNICAL PROBLEM

As disclosed in Patent Literature 1, the presence of both carbon nanotube and a particle conductive agent, such as acetylene black, in the positive electrode mixture layer weakens adhesive strength between a positive electrode current collector and the positive electrode mixture layer, which may cause removal of the positive electrode mixture layer. A secondary battery may have a problem of decreased battery capacity with repeated charges and discharges. In the art disclosed in Patent Literature 1, removal of the positive electrode mixture layer and charge-discharge cycle characteristics are not considered, and the art still has room for improvement.
It is an advantage of the present disclosure to provide a positive electrode for a non-aqueous electrolyte secondary battery that improves charge-discharge cycle characteristics with inhibiting the removal of the positive electrode mixture layer.

SOLUTION TO PROBLEM

A positive electrode for a non-aqueous electrolyte secondary battery of an aspect of the present disclosure comprises: a positive electrode current collector; and a positive electrode mixture layer formed on a surface of the positive electrode current collector. The positive electrode mixture layer includes: a positive electrode active material; and a fibrous carbon and an amorphous carbon, and when the positive electrode mixture layer is bisected in a thickness direction, and a half region on a side of the positive electrode current collector is defined as a first region and a half region on an outer surface side is defined as a second region, a ratio of the fibrous carbon to a total mass of the fibrous carbon and a non-fibrous carbon in the first region is smaller than a ratio of the fibrous carbon to a total mass of the fibrous carbon and the non-fibrous carbon in the second region.
A non-aqueous electrolyte secondary battery of an aspect of the present disclosure comprises: the above positive electrode for a non-aqueous electrolyte secondary battery; a negative electrode; and a non-aqueous electrolyte.

ADVANTAGEOUS EFFECT OF INVENTION

According to the present disclosure, a secondary battery that improves charge-discharge cycle characteristics with achieving adhesiveness of the positive electrode may be provided.

BRIEF DESCRIPTION OF DRAWINGS

FIG. 1 is an axial sectional view of a non-aqueous electrolyte secondary battery of an example of an embodiment.
FIG. 2 is a sectional view of a positive electrode of an example of an embodiment.

DESCRIPTION OF EMBODIMENTS

Hereinafter, an example of an embodiment of a non-aqueous electrolyte secondary batter according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like, and the exterior may be composed of laminated sheets including a metal layer and a resin layer.

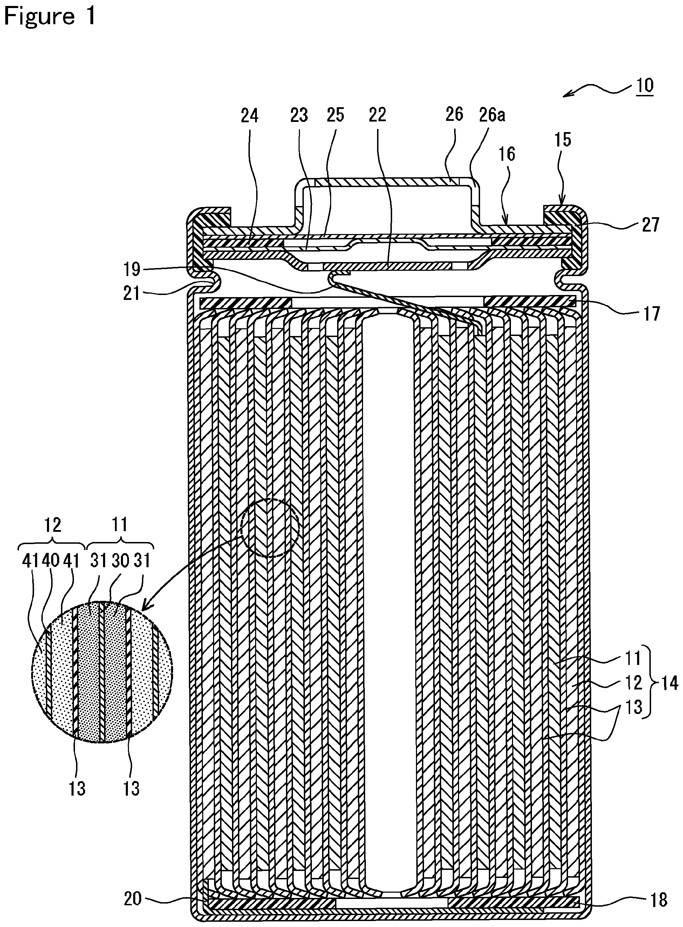

FIG. 1 is an axial sectional view of a cylindrical secondary battery 10 of an example of an embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween.
Hereinafter, for convenience of description, a sealing assembly 16 side will be described as the "upper side", and the bottom side of the exterior 15 will be described as the "lower side".

An opening end of the upper part of the exterior 15 is capped with the sealing assembly 16 to seal inside the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through an outside of the insulating plate 18 toward the bottom side of the exterior 15, and is welded to a bottom inner face of the exterior 15. In the secondary battery 10, the exterior 15 becomes a negative electrode terminal.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a groove 21 formed by, for example, pressing the side wall thereof from the outside to support the sealing assembly 16. The groove 21 is preferably formed in a circular shape along a circumferential direction of the exterior 15, and supports the sealing assembly 16 with the gasket 27 interposed therebetween and with the upper face of the groove 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected each other. The lower vent member 23 and the upper vent member 25 are connected each other at each of centers thereof, and the insulating member 24 is interposed between each of the circumference of the vent members 23 and 25. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the positive electrode 11, negative electrode 12, separator 13, and the non-aqueous electrolyte, which constitute the non-aqueous electrolyte secondary battery 10, particularly the positive electrode 11 will be described in detail.

[Positive Electrode]

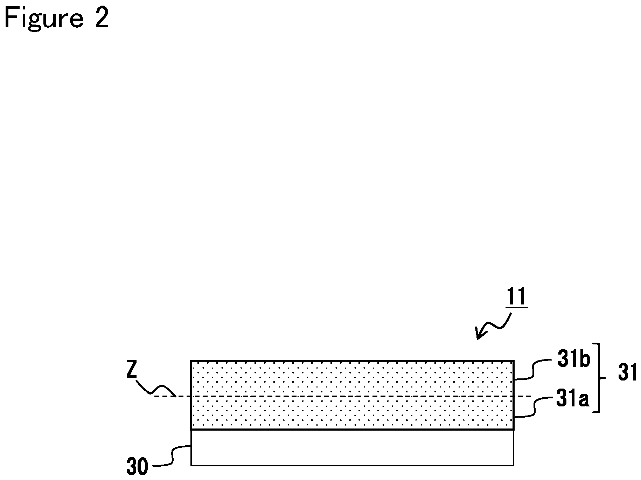

FIG. 2 is a sectional view of the positive electrode 11 of an example of an embodiment. The positive electrode 11 comprises: a positive electrode current collector 30; and a positive electrode mixture layer 31 formed on a surface of the positive electrode current collector 30. For the positive electrode current collector 30, a foil of a metal stable within a potential range of the positive electrode 11, such as aluminum and an aluminum alloy, a film in which such a metal is disposed on a surface layer, and the like may be used. The positive electrode mixture layer 31 has: a first region 31a being a half on the positive electrode current collector 30 side positioned near the positive electrode current collector 30 viewed therefrom; and a second region 31b being a half on an outer surface side positioned far from the positive electrode current collector 30 viewed therefrom, when divided in half at a middle Z in thickness of the positive electrode mixture layer 31.

The positive electrode mixture layer 31 includes: a positive electrode active material; and a fibrous carbon and a non-fibrous carbon. Examples of the positive electrode active material include a lithium-transition metal composite oxide containing a transition metal element such as Co, Mn, and Ni. Examples of the lithium-transition metal composite oxide include a composite oxide represented by the general formula $Li_xM1_yM2_{1-y}O_2$, wherein $0 \leq x \leq 1.2$, $0.3 \leq y \leq 1$, M1 represents at least one or more elements selected from Ni and Co, and M2 represents at least one or more elements selected from Mn, Zr, Mo, W, Nb, Al, Cr, V, Ce, Ti, Fe, Si, Ga, and In.

The fibrous carbon included in the positive electrode mixture layer 31 functions as a conductive agent. A content of the fibrous carbon in the positive electrode mixture layer 31 may be 0.01 mass% to 1 mass%, preferably 0.02 mass% to 0.5 mass%, and more preferably 0.03 mass% to 0.3 mass%, based on the total mass of the positive electrode mixture layer 31. Within this range, a conductive path may be achieved and dispersibility may be improved in the second region, described later.

As the fibrous carbon, known materials used for a conductive agent of a battery may be used, and examples thereof include carbon nanotube (CNT), carbon nanofiber (CNF), vapor grown carbon fiber (VGCF), electrospinning carbon fiber, polyacrylonitrile (PAN)-based carbon fiber, and pitch-based carbon fiber.

The fibrous carbon may include CNT. CNT may be any of single-wall carbon nanotube (SWCNT) and multi-wall carbon nanotube (MWCNT). Since SWCNT may form a conductive path in the positive electrode mixture layer 31 with a smaller amount thereof than MWCNT, CNT preferably includes SWCNT. The positive electrode mixture layer 31 may include not only SWCNT but also MWCNT.

CNT may have a diameter of 1 nm to 40 nm and a length of 0.1 $\mu$m to 40 $\mu$m. Within this range, the conductive path may be achieved in the positive electrode mixture layer. Here, the particle diameter of CNT is calculated by measuring diameters of 10 CNTs using a scanning electron microscope (hereinafter, which may be referred to as SEM) to average these values. The length of CNT is calculated by measuring lengths of 10 CNTs using an SEM to average these values. For example, the diameter and length of CNT may be determined from an SEM image (pixel number of 1024$\times$1280) with magnification of 50,000 observed under a condition of an acceleration voltage of 5 kV.

Examples of the non-fibrous carbon included in the positive electrode mixture layer 31 include carbon materials such as carbon black (CB), acetylene black (AB), Ketjenblack, and graphite. These materials may be used singly, or in combination of two or more thereof. A content of the conductive agent of the non-fibrous carbon in the positive electrode mixture layer 31 may be 0.1 mass% to 5 mass%, preferably 0.3 mass% to 3 mass%, and more preferably 0.5 mass% to 2 mass%, based on the total mass of the positive electrode mixture layer 31. Within this range, the filling amount of the positive electrode active material may be large, and thereby an energy density of the battery may be improved.

The positive electrode mixture layer 31 may further include a binder. Examples of the binder include a fluorine-based polymer and a rubber-based polymer. Examples of the fluorine-based polymer include polytetrafluoroethylene (PTFE), polyvinylidene fluoride (PVdF), and a modified polymer thereof. Examples of the rubber-based polymer include ethylene-propylene-isoprene copolymer and ethylene-propylene-butadiene copolymer. These binders may be used singly, or in combination of two or more thereof.

In the present embodiment as illustrated in FIG. 2, when the positive electrode mixture layer 31 is bisected in a thickness direction, and a half region on a side of the positive electrode current collector 30 is defined as the first region 31a and a half region on an outer surface side is defined as the second region 3 1b, a ratio of the fibrous carbon to a total mass of the fibrous carbon and the non-fibrous carbon in the first region 31a is smaller than a ratio of the fibrous carbon to a total mass of the fibrous carbon and the non-fibrous carbon in the second region 31b. A reduced content rate of the fibrous carbon in the first region 31a in the present embodiment may achieve adhesiveness between the positive electrode current collector 30 and the positive electrode mixture layer 31. Since CNT, which has relatively large surface area, incorporates the binder therearound, reducing the ratio near the positive electrode current collector 30 may improve the adhesiveness of the positive electrode 11. If the conductive path is cut off with repeated charges and discharges, the second region 3 1b, which is located far from the positive electrode current collector 30, is more adversely affected than the first region 31a. Thus, increasing the content rate of the fibrous carbon in the second region 3 1b to achieve the conductive path in the second region 31b may improve the charge-discharge cycle characteristics. A thickness of the positive electrode mixture layer may be, for example, 10 $\mu$m to 150 $\mu$m on one side of the positive electrode current collector.

A method of producing the positive electrode 11 is not particularly limited. The positive electrode 11 comprising the bilayer-structured positive electrode mixture layer 31 may be produced by: producing a first positive electrode mixture slurry including the positive electrode active material, the non-fibrous carbon, and the binder; producing a second positive electrode mixture slurry including the positive electrode active material, the fibrous carbon, and the binder; applying the first positive electrode mixture slurry on both surfaces of the positive electrode current collector 30, and dried; applying the second positive electrode mixture slurry thereon, and dried; and subsequently rolling the coating film with a roller, for example. Alternatively, the drying is not performed after applying the first positive electrode mixture slurry but may be performed after applying the second positive electrode mixture slurry thereon.

[Negative Electrode]

The negative electrode 12 may have: a negative electrode current collector 40; and a negative electrode mixture layer 41 formed on a surface of the negative electrode current collector 40. For the negative electrode current collector 40, a foil of a metal stable within a potential range of the negative electrode 12, such as copper and a copper alloy, a film in which such a metal is disposed on a surface layer, and the like may be used. The negative electrode mixture layer 41 may include a negative electrode active material and a binder. A thickness of the negative electrode mixture layer 41 may be, for example, 10 $\mu$m to 150 $\mu$m on one side of the negative electrode current collector 40. The negative electrode 12 may be produced by: applying a negative electrode mixture slurry including the negative electrode active material, the binder, and the like on both surfaces of the negative electrode current collector 40; drying and subsequently rolling the coating film to form the negative electrode mixture layers 41 on both surfaces of the negative electrode current collector 40, for example.

The negative electrode active material is not particularly limited as long as it may reversibly occlude and release lithium ions, and carbon materials such as graphite may be used, for example. The graphite may be any of a natural graphite such as flake graphite, massive graphite, and amorphous graphite, and an artificial graphite such as massive artificial graphite and graphitized mesophase-carbon microbead. For the negative electrode active material, a metal that forms an alloy with Li, such as Si and Sn, a metal compound including Si, Sn, and the like, a lithium-titanium composite oxide, and the like may also be used. For example, a Si-containing compound represented by $SiO_x$ ($0.5 \le x \le 1.6$), a Si-containing compound in which Si fine particles are dispersed in a lithium silicate phase represented by $Li_{2y}SiO_{(2+y)}$ ($0 < y < 2$), or the like may be used in combination with the carbon materials such as graphite.

As the binder included in the negative electrode mixture layer 41, fluorine-containing resins such as PTFE and PVdF, PAN, a polyimide, an acrylic resin, and a polyolefin may be used, but styrene-butadiene rubber (SBR) is preferably used. The negative electrode mixture layer 41 may further include CMC or a salt thereof, polyacrylic acid (PAA) or a salt thereof, polyvinyl alcohol (PVA), and the like.

[Separator]

For the separator 13, a porous sheet and the like having an ion permeation property and an insulation property are used, for example. Specific examples of the porous sheet include a fine porous thin film, a woven fabric, and a nonwoven fabric. As a material for the separator, olefin resins such as polyethylene and polypropylene, cellulose, and the like are preferable. The separator 13 may be a laminate having a cellulose fibrous layer and a thermoplastic resin fibrous layer such as an olefin resin. The separator 13 may be a multilayer separator including a polyethylene layer and a polypropylene layer. On a surface of the separator 13, a material such as an aramid resin and a ceramic may be applied to use.

[Non-Aqueous Electrolyte]

The non-aqueous electrolyte may include a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, and the like may be used, for example. The non-aqueous solvent may contain a halogen-substituted derivative in which hydrogen atoms of these solvents are at least partially substituted with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the above esters include cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as $\gamma$-butyrolactone (GBL) and $\gamma$-valerolactone (GVL); and chain carboxylates such as methyl acetate, ethyl acetate, propyl acetate, methyl propionate (MP), and ethyl propionate.

Examples of the above ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include $LiBF_4$, $LiClO_4$, $LiPF_6$, $LiAsF_6$,

LiSbF$_6$, LiAlCl$_4$, LiSCN, LiCF$_3$SO$_3$, LiCF$_3$CO$_2$, Li(P(C$_2$O$_4$)F$_4$), LiPF$_{6-x}$(C$_n$F$_{2n+1}$)$_x$ (1 < x < 6, n represents 1 or 2), LiB$_{10}$Cl$_{10}$, LiCl, LiBr, LiI, lithium chloroborane, a lithium lower aliphatic carboxylate, borate salts such as Li$_2$B$_4$O$_7$ and Li(B(C$_2$O$_4$)F$_2$), and imide salts such as LiN(SO$_2$CF$_3$)$_2$ and LiN(C$_1$F$_{2l+1}$SO$_2$)(C$_m$F$_{2m+1}$SO$_2$) {l and m represent integers of 0 or more}. As the lithium salt, one of them may be used singly, and a plurality types thereof may be mixed to be used. Among them, LiPF$_6$ is preferably used from the viewpoints of ion conductivity, electrochemical stability, and the like. A concentration of the lithium salt may be, for example, 0.8 mol to 1.8 mol per liter of the non-aqueous solvent.

EXAMPLES

Hereinafter, the present disclosure will be further described with Examples, but the present disclosure is not limited to these Examples.

<Example>

[Production of Positive Electrode]

As the positive electrode active material, a lithium-transition metal oxide represented by LiNi$_{0.8}$Co$_{0.15}$Al$_{0.05}$O$_2$ was used. This positive electrode active material, acetylene black (AB) being the non-fibrous carbon, and polyvinylidene fluoride (PVdF) having an average molecular weight of 1,100,000 were mixed at a mass ratio of 98:1:1, and the mixture was kneaded with adding N-methylpyrrolidone (NMP) to prepare a first positive electrode mixture slurry with a solid content of 70 mass%. This positive electrode active material, carbon nanotube (CNT) being the fibrous carbon, and polyvinylidene fluoride (PVdF) having an average molecular weight of 1,100,000 were mixed at a mass ratio of 98.9:0.1:1, and the mixture was kneaded with adding N-methylpyrrolidone (NMP) to prepare a second positive electrode mixture slurry with a solid content of 70 mass%. Here, CNT having a diameter of 8 nm and a length of 15 $\mu$m was used. Then, the first positive electrode mixture slurry was applied on both surfaces of a positive electrode current collector made of aluminum foil with a doctor blade method, followed by drying, and the second positive electrode mixture slurry was applied thereon, followed by drying, and then the coating film was rolled with a roller and cut to a predetermined electrode size to produce a positive electrode in which positive electrode mixture layers were formed on both surfaces of the positive electrode current collector. In this time, an application mass ratio per unit area between the first positive electrode mixture slurry and the second positive electrode mixture slurry was 5:5. On a part of the positive electrode, an exposed portion where the surface of the positive electrode current collector was exposed was provided.

[Production of Negative Electrode]

Mixing was performed so as to be 95 parts by mass of a graphite powder and 5 parts by mass of SiO to use this mixture as the negative electrode active material. So that a mass ratio between this negative electrode active material : carboxymethylcellulose (CMC) : styrene-butadiene rubber (SBR) = 100:1:1.2, these materials were kneaded in water to prepare a negative electrode mixture slurry. Then, the negative electrode mixture slurry was applied on both surfaces of a negative electrode current collector made of copper foil with a doctor blade method, followed by drying, and then the coating film was rolled with a roller and cut to a predetermined electrode size to produce a negative electrode in which negative electrode mixture layers were formed on both surfaces of the negative electrode current collector. On a part of the negative electrode, an exposed portion where the surface of the negative electrode current collector was exposed was provided.

[Preparation of Non-Aqueous Electrolyte]

Into a mixed solvent in which ethylene carbonate (EC) and dimethyl carbonate (DMC) were mixed at a volume ratio of 1:3, lithium hexafluorophosphate (LiPF$_6$) was dissolved at a concentration of 1 mol/L. Furthermore, vinylene carbonate (VC) was dissolved into the above mixed solvent at a concentration of 5 mass% to prepare a non-aqueous electrolyte (electrolyte liquid).

[Production of Secondary Battery]

An aluminum lead was attached to the exposed portion of the positive electrode, a nickel lead was attached to the exposed portion of the negative electrode, the positive electrode and the negative electrode were spirally wound with a separator in which an alumina particle layer having a thickness of 3 $\mu$m was formed on a polyethylene film having a thickness of 12 $\mu$m interposed therebetween to produce a wound electrode assembly. This electrode assembly was housed in an exterior, and the nickel lead was welded with a bottom of the exterior. Then, the aluminum lead was welded with a sealing assembly, the above non-aqueous electrolyte was injected thereinto, and then an opening of the exterior was sealed with the sealing assembly to obtain a non-aqueous electrolyte secondary battery having a designed capacity of 2500 mAh.

[Evaluation of Adhesive Strength of Positive Electrode]

A positive electrode mixture layer of the positive electrode with 10 mm $\times$ 25 mm was bonded to a double-sided tape (NICETACK NW-20, manufactured by Nichiban Co., Ltd.) attached onto an acrylic plate with 120 mm $\times$ 30 mm. Under an environment at 25°C, one end of the positive electrode was drawn upward in the vertical direction to the acrylic plate by using a compact desktop tester manufactured by NIDEC-SHIMPO CORPORATION (FGS-TV and FGP-5) with a constant rate of 50 mm/min to measure a load during removal of the positive electrode mixture layer from the positive electrode current collector with a load cell. The measurement value was specified as an adhesive strength.

[Evaluation of Capacity Maintenance Rate]

As the charge-discharge cycle characteristics, a capacity maintenance rate was evaluated. The following cycle test was performed on the above secondary battery. In the cycle test, a discharge capacity at 1st cycle and a discharge capacity at 100th cycle were determined to calculate the capacity maintenance rate with the following formula.

$$\text{Capacity Maintenance Rate (\%)} = \text{Discharge Capacity at 100th Cycle} \,/\, \text{Discharge Capacity at 1st Cycle} \times 100$$

<Cycle Test>

Under an environment at 25°C, the secondary battery was charged at a constant current of 0.7 It until a battery voltage reached 4.2 V, and charged at a constant voltage of 4.2 V until a current value reached 0.05 It. Then, the secondary battery was discharged at a constant current of 0.7 It until the battery voltage reached 2.5 V. This charge-discharge cycle was repeated 100 times. Note that It (A) = Rated Capacity (Ah) / 1 (h).

<Comparative Example 1>

A positive electrode and a secondary battery were produced and evaluated in the same manner as in Example except that, in the production of the positive electrode, the second positive electrode mixture slurry was applied on both surfaces of the positive electrode current collector, followed by drying, and the first positive electrode mixture slurry was applied thereon, followed by drying, so that the first region included AB and the second region included CNT.

<Comparative Example 2>

A positive electrode and a secondary battery were produced and evaluated in the same manner as in Example except that, in the production of the positive electrode, only the first positive electrode mixture slurry was applied on both surfaces of the positive electrode current collector with a double application mass per unit area.

<Comparative Example 3>

A positive electrode and a secondary battery were produced and evaluated in the same manner as in Example except that, in the production of the positive electrode, only the second positive electrode mixture slurry was applied on both surfaces of the positive electrode current collector with a double application mass per unit area.

<Comparative Example 4>

A positive electrode and a secondary battery were produced and evaluated in the same manner as in Example except that: in the production of the positive electrode, the positive electrode active material, AB, CNT, and PVdF were mixed at a mass ratio of 97.9:1:0.1:1; the mixture was kneaded with adding N-methylpyrrolidone (NMP) to prepare a third positive electrode mixture slurry with a solid content of 70 mass%; and the third positive electrode mixture slurry was applied on both surfaces of the positive electrode current collector so that the application mass per unit area was equal to the total mass of the first positive electrode mixture layer and the second positive electrode mixture layer.

Table 1 summarizes the adhesive strength of the positive electrode and the capacity maintenance rate of the secondary battery as the evaluation results of Example and Comparative Examples. Table 1 also describes the conductive agent included in the first region and the second region.

[Table 1]

| | Conductive agent | | Evaluation results | |
|---|---|---|---|---|
| | First region | Second region | Adhesive strength [mN] | Capacity maintenance rate [%] |
| Example | AB | CNT | 575 | 91 |
| Comparative Example 1 | CNT | AB | 401 | 79 |
| Comparative Example 2 | AB | | 581 | 78 |
| Comparative Example 3 | CNT | | 385 | 90 |
| Comparative Example 4 | CNT + AB | | 483 | 83 |

Example and Comparative Example 2 disposed single AB on the positive electrode current collector side, and thereby the adhesiveness was improved compared with Comparative Examples 1, 3, and 4, which disposed single or mixed CNT on the positive electrode current collector side. It is presumed that the adhesiveness was lowered because CNT, which had a larger specific surface area than AB, adsorbed the binder. Example and Comparative Example 3 disposed single CNT on the outer surface side, and thereby the capacity maintenance rate was improved compared with the Comparative Examples 1, 2, and 4, which disposed single or mixed AB on the outer surface side. It is presumed that adding CNT improved the conductivity on the outer surface side.

REFERENCE SIGNS LIST

10 Secondary battery, 11 Positive electrode, 12 Negative electrode, 13 Separator, 14 Electrode assembly, 15 Exterior, 16 Sealing assembly, 17, 18 Insulating plate, 19 Positive electrode lead, 20 Negative electrode lead, 21 Groove, 22 Filter, 23 Lower vent member, 24 Insulating member, 25 Upper vent member, 26 Cap, 26a Opening, 27 Gasket, 30 Positive electrode current collector, 31 Positive electrode mixture layer, 31a First region, 31b Second region, 40 Negative electrode current collector, 41 Negative electrode mixture layer

**Claims**

1. A positive electrode for a non-aqueous electrolyte secondary battery, comprising:

    a positive electrode current collector; and
    a positive electrode mixture layer formed on a surface of the positive electrode current collector, wherein
    the positive electrode mixture layer includes: a positive electrode active material; and a fibrous carbon and a non-fibrous carbon, and
    when the positive electrode mixture layer is bisected in a thickness direction, and a half region on a side of the positive electrode current collector is defined as a first region and a half region on an outer surface side is defined as a second region,
    a ratio of the fibrous carbon to a total mass of the fibrous carbon and the non-fibrous carbon in the first region is smaller than a ratio of the fibrous carbon to a total mass of the fibrous carbon and the non-fibrous carbon in the second region.

2. The positive electrode for a non-aqueous electrolyte secondary battery according to claim 1, wherein the fibrous carbon includes carbon nanotube.

3. A non-aqueous electrolyte secondary battery, comprising:

    the positive electrode for a non-aqueous electrolyte secondary battery according to claim 1 or 2;
    a negative electrode; and
    a non-aqueous electrolyte.

# Figure 1

Figure 2

**INTERNATIONAL SEARCH REPORT**

| International application No. |
| --- |
| PCT/JP2021/017974 |

**A.  CLASSIFICATION OF SUBJECT MATTER**
Int.Cl.  H01M4/1(2010.01)i, H01M4/62(2006.01)i
FI: H01M4/13, H01M4/62Z

According to International Patent Classification (IPC) or to both national classification and IPC

**B.  FIELDS SEARCHED**

Minimum documentation searched (classification system followed by classification symbols)
Int.Cl.  H01M4/13, H01M4/62

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)
JSTPlus(JDreamIII)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2016-103479 A (SK INNOVATION CO., LTD.) 02 June 2016 (2016-06-02), paragraphs [0038], [0067]-[0069], [0102] | 1-3 |
| X | JP 2019-071224 A (NISSAN MOTOR CO., LTD.) 09 May 2019 (2019-05-09), paragraphs [0227]-[0239] | 1, 3 |
| Y | | 2 |
| Y | JP 2016-058309 A (TOYOTA MOTOR CORPORATION) 21 April 2016 (2016-04-21), paragraph [0007] | 2 |
| Y | WO 2019/193882 A1 (PANASONIC INTELLECTUAL PROPERTY MANAGEMENT CO., LTD.) 10 October 2019 (2019-10-10), paragraph [0025] | 2 |

☐ Further documents are listed in the continuation of Box C.  ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 25 June 2021 | 13 July 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/017974 |

| | | |
| --- | --- | --- |
| JP 2016-103479 A | 02 June 2016 | US 2016/0156018 A1<br>paragraphs [0050], [0080]-[0084],<br>[0139]<br>KR 10-2016-0065282 A |
| JP 2019-071224 A | 09 May 2019 | CN 111201640 A<br>paragraphs [0322]-[0343] |
| JP 2016-058309 A | 21 April 2016 | US 2017/0256788 A1<br>paragraph [0008]<br>KR 10-2017-0042679 A<br>CN 106716688 A |
| WO 2019/193882 A1 | 10 October 2019 | (Family: none) |

Form PCT/ISA/210 (patent family annex) (January 2015)

**EP 4 160 717 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019061734 A